# FASCICULE DE BREVET EUROPEEN

(11) **EP 1 620 637 B1**
(45) Date de publication et mention de la délivrance du brevet: **11.07.2012**
(21) Numéro de dépôt: 04720901.0
(22) Date de dépôt: 16.03.2004
(51) Int. Cl.: F02B 29/04

(54) **SYSTEME DE REFROIDISSEMENT A BASSE TEMPERATURE D'UN EQUIPEMENT, NOTAMMENT D'UN EQUIPEMENT DE VEHICULE AUTOMOBILE, ET ECHANGEURS DE CHALEUR ASSOCIES**
SYSTEM ZUM KÜHLEN EINES AUSSTATTUNGSTEILS AUF EINE NIEDRIGE TEMPERATUR, WIE ZUM BEISPIEL EINES TEILS EINER KRAFTFAHRZEUGAUSSTATTUNG, UND ZUGEHÖRIGE WÄRMETAUSCHER
SYSTEM FOR COOLING A PIECE OF EQUIPMENT TO A LOW TEMPERATURE, SUCH AS A PIECE OF MOTOR VEHICLE EQUIPMENT, AND ASSOCIATED HEAT EXCHANGERS

(30) Priorité: 21.03.2003 FR 0303495
(43) Date de publication de la demande: 01.02.2006
(73) Titulaire: VALEO THERMIQUE MOTEUR, 78321 La Verriere (FR)
(72) Inventeur: GUERRERO, Pascal, F-78320 Le Mesnil Saint Denis (FR); AP NGY, Srun, F-78470 St Rémy Les Chevreuse (FR); JOUANNY, Philippe, F-78280 Guyancourt (FR)
(86) Numéro de dépôt international: PCT/FR2004/000636
(87) Numéro de publication internationale: WO 2004/085810

(56) Documents cités:
- EP-A- 0 352 158
- EP-A- 0 909 932
- GB-A- 2 057 564
- US-A- 3 134 371
- US-A- 4 236 492
- US-A- 5 353 757
- US-A1- 2002 011 242

## Description

L'invention concerne un système de refroidissement à basse température d'au moins un équipement, notamment un équipement de véhicule automobile, comprenant une boucle de circulation de fluide caloporteur sur laquelle sont montés un échangeur de chaleur à basse température et au moins un échangeur d'équipement comportant une surface d'échange de chaleur. Elle concerne également un échangeur de chaleur à basse température et un échangeur d'équipement faisant partie du système de refroidissement de l'invention.

Les véhicules à moteur actuels comportent un nombre de plus en plus élevé d'équipements qui échangent de la chaleur avec leur milieu extérieur. Il arrive que certains de ces équipements doivent être réchauffés, par exemple le réchauffeur de carburant. Toutefois, la plus grande partie de ces équipements doivent être refroidis. C'est le cas, en particulier, du condenseur qui fait partie du circuit de climatisation de l'habitacle du véhicule automobile, mais également du radiateur de refroidissement d'huile et du radiateur de refroidissement de l'air de suralimentation. De plus en plus souvent, également, on refroidit les gaz d'échappement afin de diminuer la pollution.

Certains de ces équipements, comme le radiateur de refroidissement d'huile ou le radiateur de refroidissement des gaz d'échappement, ne nécessitent pas d'être refroidis à une basse température. Ils peuvent donc être placés sans inconvénient sur le circuit de refroidissement du moteur thermique du véhicule dans lequel circule un fluide caloporteur dont la température est généralement comprise entre 85°C et 100°C. Cependant, d'autres équipements doivent fonctionner à une température aussi basse que possible afin d'améliorer leur rendement. C'est le cas en particulier du condenseur du circuit de climatisation et du refroidisseur d'air de suralimentation.

C'est la raison pour laquelle il est prévu d'équiper les véhicules actuellement connus d'un circuit de refroidissement à basse température dans lequel circule un fluide caloporteur à une température inférieure à celle du circuit à haute température. Le condenseur du circuit de climatisation ou le refroidisseur d'air de suralimentation peuvent ainsi être refroidis plus efficacement jusqu'à une température plus basse. On connaît par exemple de US 3,134,371 un système de refroidissement pouvant refroidir plus efficacement l'air de suralimentation.

Toutefois, dans les véhicules actuellement connus, le circuit de refroidissement à basse température est équipé d'un échangeur de chaleur à basse température qui dispose d'une seule tubulure d'entrée et d'une seule tubulure de sortie, la circulation du fluide caloporteur s'effectuant en une ou plusieurs passes. L'échangeur de chaleur à basse température ne délivre qu'un seul niveau de température et le fluide à refroidir, par exemple l'air du refroidisseur d'air de suralimentation, l'est selon un seul niveau d'échange thermique.

Sur les véhicules actuellement connus, le fluide frigorigène est condensé par l'air ambiant, mais il est possible, en utilisant un circuit à basse température, de le condenser avec le même fluide caloporteur que le refroidissement du moteur.

Le refroidissement de ces fluides est de ce fait fréquemment insuffisant pour garantir un abaissement de température optimum. Par exemple, la température de l'air de suralimentation est trop élevée vers l'admission sur les points critiques en cas de forte charge du moteur ou bien la condensation du fluide frigorigène est insuffisante, ce qui se traduit par des performances dégradées du circuit de climatisation.

La présente invention a pour objet un système de refroidissement à basse température d'au moins un équipement de véhicule automobile qui remédie à ces inconvénients.

Ces buts sont atteints, conformément à l'invention, par le fait que l'échangeur d'équipement comporte une boîte collectrice d'entrée et une boîte collectrice de sortie, chacune de ces boîtes étant scindée en deux par une cloison transversale et par le fait que la surface d'échange de chaleur de l'échangeur d'équipement est répartie entre au moins une première et une deuxième sections d'échange de chaleur définies par le nombre de tubes présents dans les deux chambres délimitées par les cloisons transversales des boîtes collectrices, la première section d'échange de chaleur étant traversée par un premier débit de fluide caloporteur, la seconde section d'échange de chaleur étant traversée par un second débit de fluide caloporteur, le premier débit étant supérieur au second débit.

Grâce à cette caractéristique, le fluide à refroidir est refroidi selon au moins deux niveaux d'échange thermique. Bien entendu, il peut également être refroidi selon plus de deux niveaux d'échange thermique.

Le fluide en cause dans lesdits premier et second débits de fluide est celui provenant de l'échangeur de chaleur à basse température, la somme desdits débits étant avantageusement égale à celui entrant dans ledit échangeur de chaleur à basse température.

Ce système de refroidissement s'applique avantageusement à un condenseur de circuit de climatisation qui comporte un étage de condensation et un étage de sous-refroidissement du fluide frigorigène.

L'échangeur de chaleur à basse température peut ne délivrer qu'un seul niveau de température. Dans ce cas, il comporte une tubulure de sortie unique. Toutefois, dans un mode de réalisation préférée, l'échangeur de chaleur à basse température comporte au moins une première et une seconde tubulure de sortie du fluide caloporteur, la première tubulure étant raccordée à la première section d'échange de chaleur de l'échangeur d'équipement, la seconde tubulure de sortie du fluide caloporteur étant raccordée à la seconde section d'échange de chaleur de l'échangeur d'équipement, le fluide caloporteur sortant de l'échangeur de chaleur à basse température par la première tubulure étant à une température supérieure à celle du fluide sortant de l'échangeur de chaleur à basse température par la seconde tubulure.

Grâce à cette caractéristique, la température du fluide caloporteur est plus basse dans la seconde section d'échange de chaleur de l'échangeur d'équipement, ce qui permet de refroidir encore davantage le fluide qui traverse cet échangeur.

Dans une réalisation particulière, l'échangeur de chaleur à basse température comporte une multiplicité de passes de circulation de fluide parcourues successivement par le fluide caloporteur, la première tubulure étant disposée en amont de la seconde tubulure par rapport à la circulation du fluide caloporteur dans les passes successives.

De cette manière, le fluide caloporteur prélevé par la première tubulure est à une température supérieure au fluide caloporteur prélevé par la seconde tubulure. Bien entendu, il est possible de prévoir plus de deux tubulures de sortie. On peut, par exemple, prévoir une troisième tubulure de sortie située en aval de la deuxième tubulure de manière à prélever du fluide à une température encore inférieure.

Avantageusement, les débits vont en décroissant. En d'autres termes, le débit prélevé par la première tubulure est plus élevé que le débit prélevé par la seconde tubulure qui est lui-même plus élevé que le débit prélevé par la troisième tubulure, etc. On peut, par exemple, prévoir des pertes de charges croissantes afin d'arriver à ce résultat.

Des caractéristiques complémentaires ou alternatives de l'invention sont énumérées ci-après :
- la boucle de circulation comporte une pompe de circulation ;
- la boucle de circulation est montée en dérivation entre l'entrée et la sortie du circuit de refroidissement du moteur thermique du véhicule automobile ;
- l'échangeur d'équipement est un refroidisseur d'air de suralimentation ;
- l'échangeur d'équipement est un condenseur faisant partie d'un circuit de climatisation de l'habitacle du véhicule automobile ;
- le condenseur comporte une section de condensation du fluide frigorigène et une section de sous-refroidissement de ce fluide et un réservoir de filtration et de déshydratation du fluide frigorigène, la section de condensation constituant la première section d'échange de chaleur de l'échangeur d'équipement et la section de sous-refroidissement constituant la seconde section d'échange de chaleur de l'échangeur d'équipement ;
- le réservoir de filtration et de déshydratation du fluide frigorigène peut être intercalé entre la section de condensation et la section de sous-refroidissement ou bien il peut être situé après la section de sous-refroidissement.

D'autres caractéristiques et avantages de l'invention apparaîtront encore à la lecture de la description qui suit d'exemples de réalisation donnés à titre illustratif en référence aux figures annexées. Sur ces figures :
- la figure 1 illustre la gestion de l'énergie thermique dégagée par un moteur de véhicule automobile au moyen d'un système comportant une boucle à haute température et une boucle à basse température ;
- la figure 2 représente un premier exemple de circulation d'un système de refroidissement à basse température indépendant conforme à l'invention ;
- la figure 3 représente un deuxième exemple de réalisation d'un système de refroidissement à basse température indépendant conforme à l'invention ;
- la figure 4 représente un système de refroidissement conforme à l'invention monté en dérivation aux bornes du circuit à haute température du moteur thermique ; et
- les figures 5 et 6 sont des vues partielles du système de refroidissement de l'invention adapté au refroidissement d'un condenseur de climatisation.

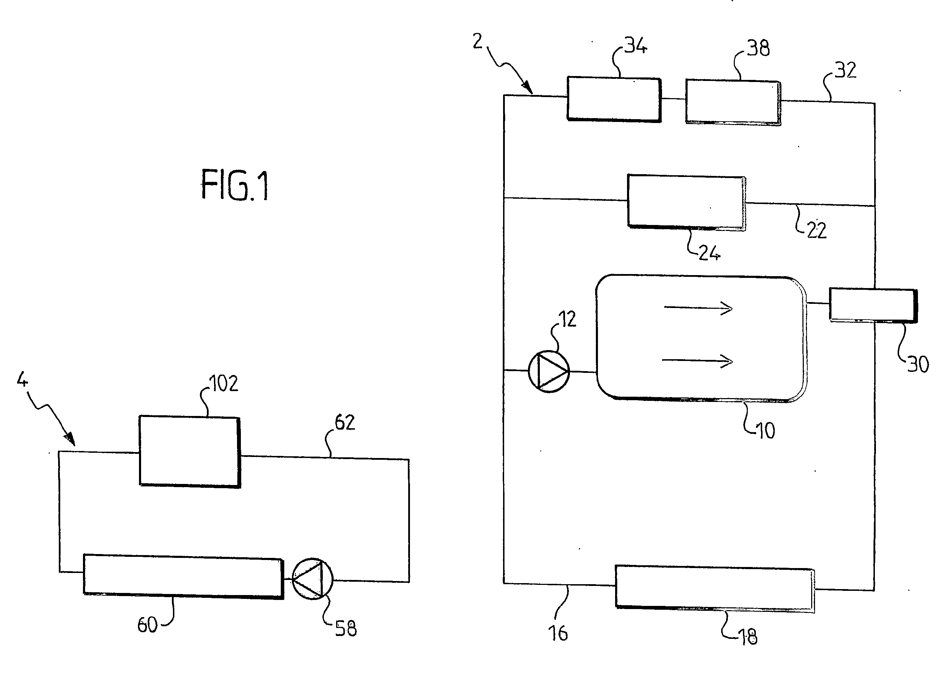

La figure 1 est une vue d'ensemble d'un système de gestion de l'énergie thermique dégagée par un moteur 10 de véhicule automobile, qui comprend une boucle à haute température, désignée par la référence générale 2 et une boucle à basse température désignée par la référence générale 4, les boucles 2 et 4 étant indépendantes. La boucle à haute température 2 comporte le moteur 10, une pompe de circulation 12 pour faire circuler le fluide caloporteur dans le circuit, un thermostat ou une vanne thermostatique (non représentée) et un radiateur à haute température 18 qui est le radiateur principal du véhicule. La boucle à haute température comporte également une branche de chauffage 22 sur laquelle est montée un aérotherme 24 utilisé pour le chauffage de l'habitacle du véhicule. Par ailleurs, des équipements qui ne nécessitent pas d'être refroidis jusqu'à une température très basse, par exemple un radiateur d'huile 34 ou un refroidisseur des gaz d'échappement 38 sont montés sur une branche 32.

La boucle à basse température 4 comprend une pompe de circulation 58, un échangeur de chaleur 60 à basse température (ici un radiateur de refroidissement) et un échangeur d'équipement 102, par exemple un condenseur d'un circuit de climatisation ou un refroidisseur d'air de suralimentation. La pompe 58 et les échangeurs 60 et 102 sont montés en série dans une branche 62.

Le débit de fluide caloporteur qui circule dans la boucle à haute température 2 est environ dix fois plus important que le débit qui circule dans la boucle à basse température 4. A titre d'exemple, le débit qui circule dans le radiateur à haute température 18 peut être de 5000 à 10 000 litres par heure, tandis que le débit qui circule dans le radiateur à basse température 60 est compris entre 0 et 1000 litres/heure.

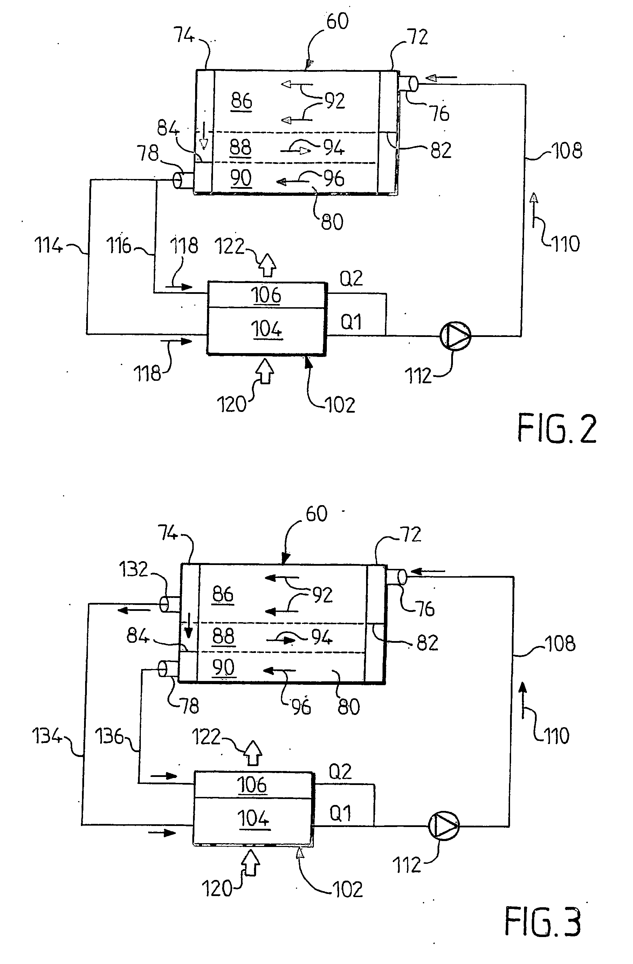

On a représenté sur la figure 2 un premier mode de réalisation d'un système de refroidissement à basse température conforme à l'invention. Le radiateur à basse température 60 comporte une boîte collectrice d'entrée 72 et une boîte collectrice de sortie 74. Une tubulure d'entrée 76 est raccordée à la boîte collectrice d'entrée 72 et une tubulure de sortie 78 est raccordée à la boîte collectrice de sortie 74. Un faisceau de tubes 80, généralement plan, est disposé entre les boîtes collectrices d'entrée 72 et de sortie 74. La boîte collectrice d'entrée 72 est divisée en deux par une cloison transversale 82, et, de la même manière, la boîte collectrice de sortie 74 est divisée en deux par une cloison transversale 84. On délimite ainsi trois passes 86, 88 et 90 pour la circulation du fluide caloporteur.

Après son entrée dans la boîte collectrice 72, le fluide caloporteur parcourt d'abord la passe 86, comme schématisé par les flèches 92, puis la passe 88 comme schématisé par la flèche 94 et enfin la passe 90 comme schématisé par la flèche 96. Le système de refroidissement comporte également un échangeur d'équipement 102, par exemple un refroidisseur d'air de suralimentation ou un condenseur de circuit de climatisation. L'échangeur d'équipement 102 comporte une boîte collectrice d'entrée et une boîte collectrice de sortie, chacune de ces boîtes étant scindée en deux par une cloison transversale (non représentées). On détermine ainsi deux sections d'échange de chaleur 104 et 106. Ces sections d'échange de chaleur sont définies par le nombre de tubes présents dans les deux chambres délimitées par les cloisons transversales des boîtes collectrices. Comme on peut l'observer sur la figure 2, la section d'échange de chaleur 104 est de préférence plus grande que la section d'échange de chaleur 106.

La boucle de circulation de fluide comprend une branche 108 dans laquelle le fluide caloporteur circule dans le sens défini par la flèche 110 sous l'impulsion d'une pompe de circulation 112, par exemple une pompe électrique. La boucle de circulation de fluide comprend également deux branches 114 et 116 dans lesquelles le fluide circule dans le sens défini par les flèches 118.

Comme schématisé par les flèches 120 et 122, le fluide à refroidir, par exemple l'air du refroidisseur d'air de suralimentation ou le fluide frigorigène du circuit de climatisation parcourt d'abord la section d'échange de chaleur 104 puis la section d'échange de chaleur 106. Ainsi, le fluide à refroidir est refroidi selon deux niveaux d'échange de chaleur.

En conséquence, le débit Q₁ du fluide caloporteur qui circule dans la première section d'échange de chaleur 104 est supérieur au débit Q₂ qui circule dans la seconde section d'échange de chaleur 106.

On a représenté sur la figure 3 un deuxième exemple de réalisation d'un système de refroidissement conforme à l'invention. Dans cet exemple, le radiateur à basse température 60 comporte deux tubulures de sortie, à savoir une tubulure 78, comme précédemment, et une deuxième tubulure référencée 132. La tubulure 132 prélève le fluide caloporteur au niveau de la première passe de circulation de fluide (flèches 92), tandis que la seconde tubulure 78 prélève le fluide au niveau de la dernière passe de circulation de fluide (flèche 96). Ainsi, le fluide caloporteur qui n'a traversé qu'une seule passe de l'échangeur à basse température 60 ressort par la tubulure de sortie 132 à une température supérieure à celle du fluide caloporteur qui a traversé successivement les trois passes de l'échangeur 60 et qui ressort par la tubulure 78.

Dans cet exemple, le radiateur de refroidissement à basse température 60 délivre donc deux niveaux de température. Le fluide du premier niveau de température pénètre dans la section d'échange de chaleur 104 par une canalisation 134, tandis que le fluide du deuxième niveau de température (plus basse) pénètre dans la section d'échange de chaleur 106 par une canalisation 136. La répartition des pertes de charge du circuit, notamment des tubulures de sortie 78 et 132 est telle que le débit Q₁ qui traverse la section d'échange 104 est supérieur au débit Q₂ qui traverse la section d'échange 106.

Un système de ce type peut permettre d'amener le fluide à refroidir à une température bien plus basse qu'un système ne délivrant qu'un seul niveau de température. A titre d'exemple, le fluide caloporteur ressort de la première passe à une température comprise entre 40°C et 60°C. Après la deuxième passe 94, sa température est comprise entre 30°C et 50°C et enfin, après la troisième passe 90, sa température descend à environ 20°C à 40°C. Le fluide caloporteur qui pénètre dans la section d'échange de chaleur 104 a donc une température moyenne de 50°C environ, tandis que le fluide qui pénètre dans la section d'échange de chaleur 106 a une température de 30°C environ. Ces valeurs sont indicatives et fonction de la température ambiante.

Le fluide à refroidir cède la plus grande partie de sa chaleur dans la première section d'échange de chaleur 104 avant d'être mis en relation d'échange thermique avec un fluide caloporteur à la température beaucoup plus basse qui permet d'abaisser sa température de sortie. Ce système de refroidissement s'applique avantageusement à un condenseur de circuit de climatisation parce qu'il permet, dans la première section d'échange de chaleur 104, d'effectuer la condensation du fluide frigorigène et d'assurer un sous-refroidissement de ce fluide dans la section d'échange de chaleur 106.

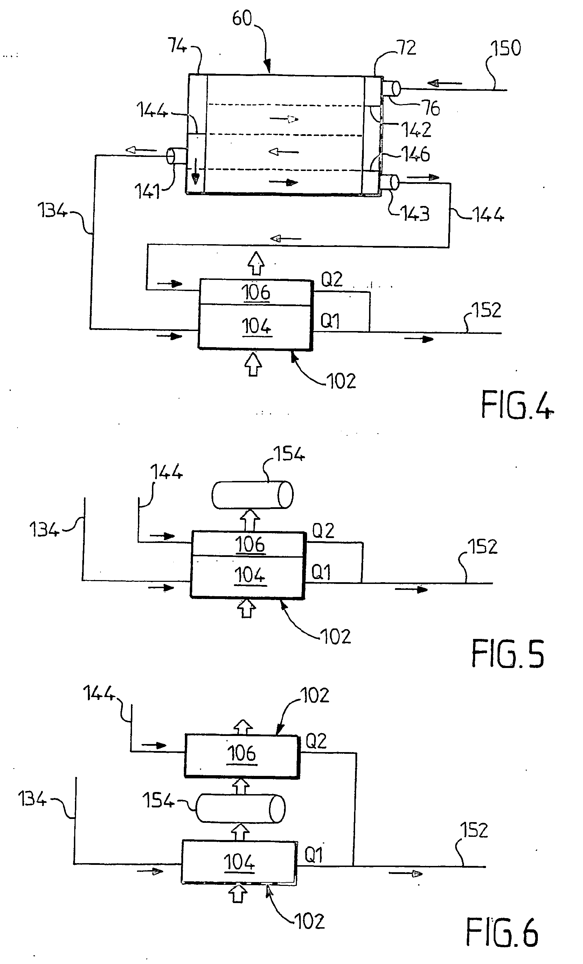

On a représenté sur la figure 4 un autre mode de réalisation d'un système de refroidissement conforme à l'invention. Dans ce système, le radiateur de refroidissement à basse température 60 comporte quatre passes. En effet, la boîte collectrice d'entrée 72 comporte deux cloisons transversales de séparation 142 et 146, tandis que la boîte collectrice de sortie 74 comporte une seule cloison de séparation 144. Les cloisons de séparation 142, 144 et 146 déterminent donc quatre allers et retour du fluide caloporteur dans les tubes de l'échangeur à basse température 60.

Une tubulure de sortie 141 prélève le fluide après son passage dans la troisième passe. Ce fluide est amené, comme dans l'exemple précédent, à la section d'échange de chaleur 104 par la canalisation 134 de l'échangeur d'équipement 102. Une tubulure de sortie 143 prélève le fluide caloporteur après son passage dans la quatrième et dernière passe de l'échangeur de chaleur à basse température 60. Ce fluide est amené par la canalisation 144 à la section d'échange de chaleur 106 de l'échangeur d'équipement 102. Ainsi, comme précédemment, le fluide qui traverse la section d'échange de chaleur 106 est à une température inférieure à celle du fluide qui traverse la section d'échange de chaleur 104.

Par ailleurs, contrairement aux exemples précédents, la boucle de circulation de fluide n'est pas indépendante, mais elle est montée en dérivation aux bornes du circuit à haute température 2. Une canalisation 150 peut prélever le fluide directement à la sortie du moteur. Une canalisation 152 est raccordée à l'entrée du moteur du véhicule.

Ainsi, dans cet exemple de réalisation, la température du fluide est plus élevée que dans les cas précédents. Le fluide caloporteur pénètre dans la boîte collectrice d'entrée à une température de 90°C environ. Il ressort par la tubulure de sortie 141 à une température de 60°C environ et par la tubulure de sortie 143 à une température de 40°C environ. On constate, en conséquence, que, malgré une température d'entrée élevée, le fluide caloporteur peut être refroidi jusqu'à une température relativement basse.

Le système de refroidissement de l'invention s'applique avantageusement au refroidissement du fluide frigorigène d'un circuit de climatisation comme représenté sur les figures 5 et 6. On sait en effet que les condenseurs des circuits de climatisation comprennent un réservoir intermédiaire, appelé "bouteille" qui permet la filtration et la déshydratation du fluide réfrigérant. Ce réservoir intermédiaire permet également une compensation des variations de volume de ce fluide et la séparation des phases liquide et gazeuse. Son interposition entre une partie amont et une partie aval du condenseur permet de ne faire circuler dans cette dernière que du fluide à l'état liquide qui est ainsi sous-refroidi au dessous de la température d'équilibre liquide/gaz, améliorant les performances du condenseur et rendant celles-ci relativement indépendantes de la quantité de fluide contenue dans le circuit.

Le réservoir intermédiaire est généralement fixé sur une embase solidaire de l'une des boîtes collectrices du condenseur et traversé par deux conduites de liaison. Ce réservoir est muni à son extrémité inférieure d'une tête fixée sur l'embase au moyen d'un pas de vis.

Cette situation correspond à la réalisation représentée sur la figure 6, dans laquelle le réservoir intermédiaire 154 est interposé entre les sections d'échange de chaleur 104 et 106. La section d'échange de chaleur 104 assure ainsi la condensation du fluide frigorigène, tandis que la section d'échange de chaleur 106 assure son sous-refroidissement.

Dans une variante de réalisation représentée sur la figure 5, le réservoir peut être disposé à la sortie de l'étage de sous-refroidissement. Toutefois le condenseur comporte de la même manière une section de condensation 104 et une section de sous-refroidissement 106.

## Revendications

1. Système de refroidissement à basse température d'au moins un équipement, notamment un équipement de véhicule automobile, comprenant une boucle de circulation (4) de fluide caloporteur sur laquelle sont montés un échangeur de chaleur à basse température (60) et au moins un échangeur d'équipement (102) comportant une surface d'échange de chaleur comportant des tubes (25), **caractérisé en ce que** l'échangeur de chaleur à basse température (60) comporte une boîte collectrice d'entrée (72) et une boîte collectrice de sortie (74), chacune de ces boîtes (72, 74) étant scindée en deux par une cloison transversale (82, 84) et **en ce que** la surface d'échange de chaleur de l'échangeur d'équipement (102) est répartie entre au moins une première et une deuxième sections d'échange de chaleur (104, 106) définies par le nombre de tubes (25) présents dans les deux chambres délimitées par les cloisons transversales des boîtes collectrices, la première section d'échange de chaleur (102) étant traversée par un premier débit (Q₁) de fluide caloporteur, la seconde section d'échange de chaleur (106) étant traversée par un second débit (Q₂) de fluide caloporteur, le premier débit (Q₁) étant supérieur au second débit (Q₂).

2. Système de refroidissement selon la revendication 1, **caractérisé en ce que** l'échangeur de chaleur à basse température (60) comporte au moins une première et une seconde tubulures de sortie (78, 132, 141, 143) du fluide caloporteur, la première tubulure étant raccordée à la première section d'échange de chaleur (104), la seconde tubulure étant accordée à la seconde section d'échange de chaleur (106), le fluide caloporteur sortant de l'échangeur à basse température (60) par la première tubulure de sortie étant à une température supérieure à celle du fluide caloporteur sortant de l'échangeur de chaleur à basse température par la seconde tubulure de sortie.

3. Système de refroidissement selon la revendication 2, **caractérisé en ce que** l'échangeur de chaleur à basse température (60) comporte une multiplicité de passes de circulation de fluide (86, 88, 90) parcourues successivement par le fluide caloporteur, la première tubulure étant disposée en amont de la seconde tubulure par rapport à la circulation du fluide caloporteur dans les passes (86, 88, 90).

4. Système de refroidissement selon l'une des revendications 1 à 3, **caractérisé en ce que** la boucle de circulation à basse température (4) comporte une pompe de circulation (58).

5. Système de refroidissement selon l'une des revendications 1 à 3, **caractérisé en ce que** la boucle de circulation à basse température (4) est montée en dérivation entre l'entrée et la sortie du circuit de refroidissement (2) du moteur thermique du véhicule automobile.

6. Système de refroidissement selon l'une des revendications 1 à 5, **caractérisé en ce que** l'échangeur d'équipement (102) est un refroidisseur d'air de suralimentation.

7. Système de refroidissement selon l'une des revendications 1 à 5, **caractérisé en ce que** l'échangeur d'équipement (102) est un condenseur faisant partie du circuit de climatisation de l'habitacle du véhicule automobile.

8. Système de refroidissement selon la revendication 7, **caractérisé en ce que** le condenseur comporte une section de condensation du fluide frigorigène (104) et une section de sous-refroidissement du fluide frigorigène (106) et un réservoir (154) de filtration et de déshydratation du fluide frigorigène, la section de condensation constituant la première section d'échange de chaleur (104) de l'échangeur d'équipement, la section de sous-refroidissement constituant la deuxième section d'échange de chaleur (106) de l'échangeur d'équipement.

9. Système de refroidissement selon la revendication 8, **caractérisé en ce que** le réservoir (154) est intercalé entre la première section d'échange de chaleur (104) et la deuxième section d'échange de chaleur (106).

10. Système de refroidissement selon la revendication 8, **caractérisé en ce que** le réservoir (154) est situé après la deuxième section d'échange de chaleur (106).

## Claims

1. System for cooling to a low temperature at least one piece of equipment, particularly a piece of motor vehicle equipment, comprising a circulation loop (4) for heat-transfer fluid on which loop are mounted a low-temperature heat exchanger (60) and at least an equipment exchanger (102) comprising a heat-exchange surface comprising tubes (25) **characterized in that** the low-temperature heat exchanger (60) comprises an inlet header box (72) and an outlet header box (74), each of these boxes (72, 74) being split into two by a transverse partition (82, 84) and **in that** the heat-exchange surface of the equipment exchanger (102) is split between at least a first and a second heat-exchange section (104, 106) defined by the number of tubes (25) present in the two chambers delimited by the transverse partitions of the header boxes, the first heat-exchange section (102) having a first flow rate (Q₁) of heat-transfer fluid passing through it, the second heat-exchange section (106) having a second flow rate (Q₂) of heat-transfer fluid passing through it, the first flow rate (Q₁) being greater than the second flow rate (Q₂).

2. Cooling system according to Claim 1, **characterized in that** the low-temperature heat exchanger (60) comprises at least a first and a second outlet nozzle (78, 132, 141, 143) for the heat-transfer fluid, the first nozzle being connected to the first heat-exchange section (104), the second nozzle being connected to the second heat-exchange section (106), the heat-transfer fluid leaving the low-temperature exchanger (60) via the first outlet nozzle being at a temperature higher than that of the heat-transfer fluid leaving the low-temperature heat exchanger via the second outlet nozzle.

3. Cooling system according to Claim 2, **characterized in that** the low-temperature heat exchanger (60) comprises a multitude of fluid circulation passes (86, 88, 90) through which the heat-transfer fluid travels in succession, the first nozzle being located upstream of the second nozzle with respect to the circulation of the heat-transfer fluid through the passes (86, 88, 90).

4. Cooling system according to one of Claims 1 to 3, **characterized in that** the low-temperature circulation loop (4) comprises a circulation pump (58).

5. Cooling system according to one of Claims 1 to 3, **characterized in that** the low-temperature circulation loop (4) is mounted as a bypass between the inlet and outlet of the cooling circuit (2) of the motor vehicle combustion engine.

6. Cooling system according to one of Claims 1 to 5, **characterized in that** the equipment exchanger (102) is an intercooler.

7. Cooling system according to one of Claims 1 to 5, **characterized in that** the equipment exchanger (102) is a condenser forming part of the motor vehicle cabin air-conditioning circuit.

8. Cooling system according to Claim 7, **characterized in that** the condenser comprises a coolant-fluid condensation section (104) and a coolant-fluid supercooling section (106) and a reservoir (154) for filtering and dehydrating the coolant fluid, the condensation section constituting the first heat-exchange section (104) of the equipment exchanger, the supercooling section constituting the second heat-exchange section (106) of the equipment exchanger.

9. Cooling system according to Claim 8, **characterized in that** the reservoir (154) is inserted between the first heat-exchange section (104) and the second heat-exchange section (106).

10. Cooling system according to Claim 8, **characterized in that** the reservoir (154) is situated after the second heat-exchange section (106).

## Patentansprüche

1. System zum Kühlen mindestens einer Ausrüstung, insbesondere einer Kraftfahrzeug-Ausrüstung, auf niedrige Temperatur, das eine Wärmeträgerfluid-Umwälzschleife (4) enthält, auf die ein Niedertemperatur-Wärmetauscher (60) und mindestens ein Ausrüstungs-Wärmetauscher (102) montiert sind, der eine Rohre (25) aufweisende Wärmetauscherfläche aufweist, **dadurch gekennzeichnet, dass** der Niedertemperatur-Wärmetauscher (60) einen Eingangssammelbehälter (72) und einen Ausgangssammelbehälter (74) aufweist, wobei jeder dieser Behälter (72, 74) durch eine Quertrennwand (82, 84) zweigeteilt ist, und dass die Wärmetauscherfläche des Ausrüstungs-Wärmetauschers (102) zwischen mindestens einem ersten und einem zweiten Wärmetauscherabschnitt (104, 106) verteilt ist, die durch die in den zwei von den Quertrennwänden der Sammelbehälter begrenzten Kammern vorhandene Anzahl von Rohren (25) definiert werden, wobei der erste Wärmetauscherabschnitt (102) von einer ersten Durchflussmenge (Q₁) von Wärmeträgerfluid durchquert wird, wobei der zweite Wärmetauscherabschnitt (106) von einer zweiten Durchflussmenge (Q₂) von Wärmeträgerfluid durchquert wird, wobei die erste Durchflussmenge (Q₁) größer ist als die zweite Durchflussmenge (Q₂).

2. Kühlsystem nach Anspruch 1, **dadurch gekennzeichnet, dass** der Niedertemperatur-Wärmetauscher (60) mindestens einen ersten und einen zweiten Ausgangsanschlussstutzen (78, 132, 141, 143) des Wärmeträgerfluids aufweist, wobei der erste Anschlussstutzen an den ersten Wärmetauscherabschnitt (104) angeschlossen ist, der zweite Anschlussstutzen an den zweiten Wärmetauscherabschnitt (106) angeschlossen ist, wobei das durch den ersten Anschlussstutzen aus dem Niedertemperatur-Tauscher (60) austretende Wärmeträgerfluid auf einer höheren Temperatur ist als das durch den zweiten Ausgangsanschlussstutzen aus dem Niedertemperatur-Wärmetauscher austretende Wärmeträgerfluid.

3. Kühlsystem nach Anspruch 2, **dadurch gekennzeichnet, dass** der Niedertemperatur-Wärmetauscher (60) eine Vielzahl von Fluidumwälzdurchläufen (86, 88, 90) aufweist, die nacheinander von dem Wärmeträgerfluid durchquert werden, wobei der erste Anschlussstutzen bezüglich der Umwälzung des Wärmeträgerfluids in den Durchläufen (86, 88, 90) vor dem zweiten Anschlussstutzen angeordnet ist.

4. Kühlsystem nach einem der Ansprüche 1 bis 3, **dadurch gekennzeichnet, dass** die Niedertemperatur-Umwälzschleife (4) eine Umwälzpumpe (58) aufweist.

5. Kühlsystem nach einem der Ansprüche 1 bis 3, **dadurch gekennzeichnet, dass** die Niedertemperatur-Umwälzschleife (4) in Ableitung zwischen dem Eingang und dem Ausgang des Kühlkreislaufs (2) des Verbrennungsmotors des Kraftfahrzeugs montiert ist.

6. Kühlsystem nach einem der Ansprüche 1 bis 5, **dadurch gekennzeichnet, dass** der Ausrüstungs-Wärmetauscher (102) ein Aufladeluftkühler ist.

7. Kühlsystem nach einem der Ansprüche 1 bis 5, **dadurch gekennzeichnet, dass** der Ausrüstungs-Wärmetauscher (102) ein Kondensator ist, der Teil des Klimatisierungskreislaufs des Innenraums des Kraftfahrzeugs ist.

8. Kühlsystem nach Anspruch 7, **dadurch gekennzeichnet, dass** der Kondensator einen Kondensationsabschnitt der Kühlflüssigkeit (104) und einen Unterkühlungsabschnitt der Kühlflüssigkeit (106) und einen Behälter (154) zum Filtern und Dehydrieren der Kühlflüssigkeit aufweist, wobei der Kondensationsabschnitt den ersten Wärmetauscherabschnitt (104) des Ausrüstungs-Wärmetauschers, der Unterkühlungsabschnitt den zweiten Wärmetauscherabschnitt (106) des Ausrüstungskühlers bildet.

9. Kühlsystem nach Anspruch 8, **dadurch gekennzeichnet, dass** der Behälter (154) zwischen den ersten Wärmetauscherabschnitt (104) und den zweiten Wärmetauscherabschnitt (106) eingefügt ist.

10. Kühlsystem nach Anspruch 8, **dadurch gekennzeichnet, dass** der Behälter (154) nach dem zweiten Wärmetauscherabschnitt (106) angeordnet ist.
